# EUROPEAN PATENT APPLICATION

(11) **EP 4 746 478 A1**
(43) Date of publication of application: **20.05.2026**
(21) Application number: 24850922.6
(22) Date of filing: 02.08.2024
(51) Int. Cl.: H04W 12/06

(54) **VERIFICATION METHOD AND APPARATUS FOR DATA COLLECTION**

(30) Priority: 10.08.2023 CN 202311014019
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Maiwald GmbH
(86) International application number: PCT/CN2024/109429
(87) International publication number: WO 2025/031277

(57) **Abstract**

This application provides a data collection verification method and an apparatus. The method includes: A network device sends first indication information to a DCAF, where the first indication information indicates that a first access stratum data set of a terminal device can be provided to another network element only after the first access stratum data set is authorized; the network device receives first request information from an ECAF or a non-access stratum of the terminal device, where the first request information is used to request authorization of a second access stratum data set; the network device sends first information to the ECAF or the non-access stratum of the terminal device, where the first information indicates a first key, the first key is used for authorization of a third access stratum data set, and the third access stratum data set includes all or a part of data in the second access stratum data set; the network device receives the first information from the DCAF or an access stratum of the terminal device; and the network device sends second information to the DCAF or the access stratum of the terminal device, where the second information indicates a verification result of the first key.

## Description

This application claims priority to Chinese Patent Application No. 202311014019.7, filed with the China National Intellectual Property Administration on August 10, 2023 and entitled "DATA COLLECTION VERIFICATION METHOD AND APPARATUS", which is incorporated herein by reference in its entirety.

### TECHNICAL FIELD

This application relates to the communication field, and specifically, to a data collection verification method and an apparatus.

### BACKGROUND

With improvement of data storage and computing capabilities, an artificial intelligence (artificial intelligence, AI) technology is increasingly used. The AI technology can be used in communication systems such as a new radio (new radio, NR) system, to improve network performance and user experience through intelligent data collection and analysis.

The 3rd generation partnership project (3rd generation partnership project, 3GPP) introduces a plurality of AI application scenarios, such as channel state information (Channel State Information, CSI) feedback enhancement, beam management (beam management, BM), and positioning accuracy enhancement (Positioning accuracy enhancement) using Al.

An AI model needs to collect data of a terminal device. In a permission management procedure in which an event consumer (Event Consumer) subscribes to a data collection function from a data collection application function (Data Collection AF, DCAF), an authorization application server (Authorization Application Server, AAS) is introduced, and a key (token) provided by the AAS to an event consumer application function (Event Consumer AF, ECAF) network element is verified, to determine whether the DCAF can send the data to the corresponding ECAF.

However, in the foregoing AI application scenarios, input of the AI model is access stratum (Access Stratum, AS) data of user equipment (User Equipment, UE). Because the AS stratum data is usually collected by an operator and the operator has permission to process the AS stratum data, a current AAS authorization mechanism cannot be directly used. In addition, there is no related authorization mechanism for the AS stratum data. As a result, when the AS stratum data is collected, the AS data may be inappropriately exposed to a third-party ECAF node due to lack of authorization.

### SUMMARY

This application provides a data collection verification method and an apparatus. When AS stratum data is collected, AS data collection and authorization can be completed through permission management of a network device.

According to a first aspect, a data collection verification method is provided. The method may be performed by a network device, or may be performed by a chip or a circuit disposed in the network device. This is not limited in this application.

The method includes: The network device sends first indication information to a data collection application function network element, where the first indication information indicates that access stratum data in a first access stratum data set of a terminal device can be provided to another network element only after the access stratum data is authorized; the network device receives first request information from an event consumer application function network element or a non-access stratum of the terminal device, where the first request information is used to request authorization of a second access stratum data set, and the second access stratum data set includes all or a part of the data in the first access stratum data set; the network device sends first information to the event consumer application function network element or the non-access stratum of the terminal device, where the first information indicates a first key, the first key is used for authorization of a third access stratum data set, and the third access stratum data set includes all or a part of data in the second access stratum data set; the network device receives the first information from the data collection application function network element or an access stratum of the terminal device; and the network device sends second information to the data collection application function network element or the access stratum of the terminal device, where the second information indicates a verification result of the first key.

According to the foregoing solution, the event consumer application function network element can obtain collected access stratum measurement data from the data collection application function network element only after being authorized by the network device. This ensures that the network device performs permission management on access stratum data collection, and avoids a case in which the access stratum data is directly exposed to another network node on the non-access stratum.

With reference to the first aspect, in some implementations of the first aspect, the network device sends second indication information to the access stratum of the terminal device, where the second indication information indicates that access stratum data in a fourth access stratum data set can be sent to the non-access stratum of the terminal device.

According to the foregoing solution, the network device may configure additional measurement for an access stratum of UE, to extend a data collection range.

In a possible implementation, the network device sends third indication information to the event consumer application function network element or the non-access stratum of the terminal device, where the third indication information indicates that a request for a part of the access stratum data in the second access stratum data set is not authorized, the third indication information includes reason information, and the reason information indicates a reason why the request for the access stratum data is not authorized.

In a possible implementation, the second access stratum data set further includes all or a part of data in a fifth access stratum data set, and the fifth access stratum data set is access stratum data requested by the event consumer application function network element from the data collection application function network element.

According to a second aspect, a data collection verification method is provided. The method may be performed by a data collection application function network element, or may be performed by a chip or a circuit disposed in the data collection application function network element. This is not limited in this application.

The method includes: The data collection application function network element receives first indication information from a network device, where the first indication information indicates that access stratum data in a first access stratum data set of a terminal device can be provided to another network element only after the access stratum data is authorized; the data collection application function network element receives second request information from an event consumer application function network element, where the second request information is used to request a third access stratum data set of the terminal device, the second request information includes first information, the first information indicates a first key, and the first key is used for authorization of the third access stratum data set; the data collection application function network element sends the first information to the network device; and the data collection application function network element receives second information from the network device, where the second information indicates a verification result of the first key.

According to the foregoing solution, the event consumer application function network element can obtain collected access stratum measurement data from the data collection application function network element only after being authorized by the network device. This ensures that the network device performs permission management on access stratum data collection, and avoids a case in which the access stratum data is directly exposed to another network node on a non-access stratum.

In a possible implementation, the data collection application function network element receives third request information from the event consumer application function network element, where the third request information is used to request a fifth access stratum data set of the terminal device; and the data collection application function network element sends third information to the event consumer application function network element, where the third information indicates that a second access stratum data set needs to be authorized by the network device, the second access stratum data set includes all or a part of data in the fifth access stratum data set, the third information includes first identifier information, and the first identifier information includes an identifier of the network device.

In a possible implementation, the data collection application function network element sends first acknowledgment information to the event consumer application function network element, where the first acknowledgment information indicates a request result of the third request information.

According to a third aspect, a data collection verification method is provided. The method may be performed by an event consumer application function network element, or may be performed by a chip or a circuit disposed in the event consumer application function network element. This is not limited in this application.

The method includes: The event consumer application function network element sends first request information to a network device, where the first request information is used to request authorization of a second access stratum data set of a terminal device; the event consumer application function network element receives first information from the network device, where the first information indicates a first key, the first key is used for authorization of a third access stratum data set, and the third access stratum data set includes all or a part of data in the second access stratum data set; and the event consumer application function network element sends second request information to a data collection application function network element, where the second request information is used to request the third access stratum data set, and the second request information includes the first information.

According to the foregoing solution, the event consumer application function network element can obtain collected access stratum measurement data from the data collection application function network element only after being authorized by the network device. This ensures that the network device performs permission management on access stratum data collection, and avoids a case in which the access stratum data is directly exposed to another network node on a non-access stratum.

In a possible implementation, the event consumer application function network element sends third request information to the data collection application function network element, where the third request information is used to request a fifth access stratum data set of the terminal device; and the event consumer application function network element receives third information from the data collection application function network element, where the third information indicates that the second access stratum data set needs to be authorized by the network device, the second access stratum data set includes all or a part of data in the fifth access stratum data set, the third information includes first identifier information, and the first identifier information includes an identifier of the network device.

In a possible implementation, the event consumer application function network element receives first acknowledgment information from the data collection application function network element, where the first acknowledgment information indicates a request result of the third request information.

According to a fourth aspect, a data collection verification method is provided. The method may be performed by a terminal device, or may be performed by a chip or a circuit disposed in the terminal device. This is not limited in this application.

The method includes: A non-access stratum of the terminal device receives first request information from a data collection application function network element, where the first request information is used to request authorization of a second access stratum data set of the terminal device; the non-access stratum of the terminal device sends the first request information to a network device; the non-access stratum of the terminal device receives first information from the network device, where the first information includes a first key, the first key is used for authorization of a third access stratum data set, and the third access stratum data set includes all or a part of data in the second access stratum data set; the non-access stratum of the terminal device sends the first information to an access stratum of the terminal device; the access stratum of the terminal device sends the first information to the network device; and the access stratum of the terminal device receives second information from the network device, where the second information indicates whether the first key is correct.

According to the foregoing solution, an authorization application of the event consumer application function network element is forwarded to the network device by the non-access stratum of the terminal device, authorization verification is completed between the terminal device and the network device, and an authorization result and a data collection result are sent to the event consumer application function network element by the data collection application function network element, to ensure that access stratum data is collected under authorization.

In a possible implementation, the non-access stratum of the terminal device sends authorization result information to the data collection application function network element, where the authorization result information indicates data that is authorized and data that is not authorized in the second access stratum data set.

According to a fifth aspect, a data collection verification method is provided. The method may be performed by an event consumer application function network element, or may be performed by a chip or a circuit disposed in the event consumer application function network element. This is not limited in this application.

The method includes: The event consumer application function network element sends third request information to a data collection application function network element, where the third request information is used to request a fifth access stratum data set of a terminal device; the event consumer application function network element receives fourth information from the data collection application function network element, where the fourth information indicates that a second access stratum data set needs to be authorized by a non-access stratum of the terminal device, and the second access stratum data set includes all or a part of data in the fifth access stratum data set; and the event consumer application function network element sends first request information to the data collection application function network element, where the first request information is used to request authorization of the second access stratum data set, and the first request information includes identifier information of the ECAF.

In a possible implementation, the event consumer application function network element receives first acknowledgment information from the data collection application function network element, where the first acknowledgment information indicates a request result of the third request information.

According to a sixth aspect, a data collection verification method is provided. The method may be performed by a data collection application function network element, or may be performed by a chip or a circuit disposed in the data collection application function network element. This is not limited in this application.

The method includes: The data collection application function network element receives third request information from an event consumer application function network element, where the third request information is used to request a fifth access stratum data set of a terminal device; the data collection application function network element sends fourth information to the event consumer application function network element, where the fourth information indicates that a second access stratum data set needs to be authorized by a non-access stratum of the terminal device, and the second access stratum data set includes all or a part of data in the fifth access stratum data set; the data collection application function network element receives first request information from the event consumer application function network element, where the first request information is used to request authorization of the second access stratum data set, and the first request information includes identifier information of the ECAF; and the data collection application function network element sends the first request information to the non-access stratum of the terminal device.

In a possible implementation, the data collection application function network element sends first acknowledgment information to the event consumer application function network element, where the first acknowledgment information indicates a request result of the third request information.

According to a seventh aspect, a data collection verification apparatus is provided. The apparatus includes: a sending unit, configured to send first indication information to a data collection application function network element, where the first indication information indicates that access stratum data in a first access stratum data set of a terminal device can be provided to another network element only after the access stratum data is authorized; and a receiving unit, configured to receive first request information from an event consumer application function network element or a non-access stratum of the terminal device, where the first request information is used to request authorization of a second access stratum data set, and the second access stratum data set includes all or a part of the data in the first access stratum data set. The sending unit is further configured to send first information to the event consumer application function network element or the non-access stratum of the terminal device, where the first information indicates a first key, the first key is used for authorization of a third access stratum data set, and the third access stratum data set includes all or a part of data in the second access stratum data set. The receiving unit is further configured to receive the first information from the data collection application function network element or an access stratum of the terminal device. The sending unit is further configured to send second information to the data collection application function network element or the access stratum of the terminal device, where the second information indicates a verification result of the first key.

In a possible implementation, the sending unit is further configured to send second indication information to the access stratum of the terminal device, where the second indication information indicates that access stratum data in a fourth access stratum data set can be sent to the non-access stratum of the terminal device.

In a possible implementation, the sending unit is further configured to send third indication information to the event consumer application function network element or the non-access stratum of the terminal device, where the third indication information indicates that a request for a part of the access stratum data in the second access stratum data set is not authorized, the third indication information includes reason information, and the reason information indicates a reason why the request for the access stratum data is not authorized.

In a possible implementation, the second access stratum data set further includes all or a part of data in a fifth access stratum data set, and the fifth access stratum data set is access stratum data requested by the event consumer application function network element from the data collection application function network element.

According to an eighth aspect, a data collection verification apparatus is provided. The apparatus includes: a receiving unit, configured to: receive first indication information from a network device, where the first indication information indicates that access stratum data in a first access stratum data set of a terminal device can be provided to another network element only after the access stratum data is authorized, where the receiving unit is further configured to receive second request information from an event consumer application function network element, where the second request information is used to request a third access stratum data set of the terminal device, the second request information includes first information, the first information indicates a first key, and the first key is used for authorization of the third access stratum data set; and a sending unit, configured to send the first information to the network device. The receiving unit is further configured to receive second information from the network device, where the second information indicates a verification result of the first key.

In a possible implementation, the receiving unit is further configured to receive third request information from the event consumer application function network element, where the third request information is used to request a fifth access stratum data set of the terminal device. The sending unit is further configured to send third information to the event consumer application function network element, where the third information indicates that a second access stratum data set needs to be authorized by the network device, the second access stratum data set includes all or a part of data in the fifth access stratum data set, the third information includes first identifier information, and the first identifier information includes an identifier of the network device.

In a possible implementation, the sending unit is further configured to send first acknowledgment information to the event consumer application function network element, where the first acknowledgment information indicates a request result of the third request information.

According to a ninth aspect, a data collection verification apparatus is provided. The apparatus includes: a sending unit, configured to send first request information to a network device, where the first request information is used to request authorization of a second access stratum data set of a terminal device; and a receiving unit, configured to receive first information from the network device, where the first information indicates a first key, the first key is used for authorization of a third access stratum data set, and the third access stratum data set includes all or a part of data in the second access stratum data set. The sending unit is further configured to send second request information to a data collection application function network element, where the second request information is used to request the third access stratum data set, and the second request information includes the first information.

In a possible implementation, the sending unit is further configured to send third request information to the data collection application function network element, where the third request information is used to request a fifth access stratum data set of the terminal device. The receiving unit is further configured to receive third information from the data collection application function network element, where the third information indicates that the second access stratum data set needs to be authorized by the network device, the second access stratum data set includes all or a part of data in the fifth access stratum data set, the third information includes first identifier information, and the first identifier information includes an identifier of the network device.

In a possible implementation, the receiving unit is further configured to receive first acknowledgment information from the data collection application function network element, where the first acknowledgment information indicates a request result of the third request information.

According to a tenth aspect, a data collection verification apparatus is provided. The apparatus includes: a receiving unit, configured to be used by a non-access stratum of a terminal device to receive first request information from a data collection application function network element, where the first request information is used to request authorization of a second access stratum data set of the terminal device; and a sending unit, configured to be used by the non-access stratum of the terminal device to send the first request information to a network device. The receiving unit is further configured to be used by the non-access stratum of the terminal device to receive first information from the network device, where the first information includes a first key, the first key is used for authorization of a third access stratum data set, and the third access stratum data set includes all or a part of data in the second access stratum data set. The sending unit is further configured to be used by the non-access stratum of the terminal device to send the first information to an access stratum of the terminal device. The sending unit is further configured to be used by the access stratum of the terminal device to send the first information to the network device. The receiving unit is further configured to be used by the access stratum of the terminal device to receive second information from the network device, where the second information indicates whether the first key is correct.

In a possible implementation, the sending unit is further configured to be used by the non-access stratum of the terminal device to send authorization result information to the data collection application function network element, where the authorization result information indicates data that is authorized and data that is not authorized in the second access stratum data set.

According to an eleventh aspect, a data collection verification apparatus is provided. The apparatus includes: a sending unit, configured to send third request information to a data collection application function network element, where the third request information is used to request a fifth access stratum data set of a terminal device; and a receiving unit, configured to receive fourth information from the data collection application function network element, where the fourth information indicates that a second access stratum data set needs to be authorized by a non-access stratum of the terminal device, and the second access stratum data set includes all or a part of data in the fifth access stratum data set. The sending unit is further configured to send first request information to the data collection application function network element, where the first request information is used to request authorization of the second access stratum data set, and the first request information includes identifier information of an ECAF.

In a possible implementation, the receiving unit is further configured to receive first acknowledgment information from the data collection application function network element, where the first acknowledgment information indicates a request result of the third request information.

According to a twelfth aspect, a data collection verification apparatus is provided. The apparatus includes: a receiving unit, configured to receive third request information from an event consumer application function network element, where the third request information is used to request a fifth access stratum data set of a terminal device; and a sending unit, configured to send fourth information to the event consumer application function network element, where the fourth information indicates that a second access stratum data set needs to be authorized by a non-access stratum of the terminal device, and the second access stratum data set includes all or a part of data in the fifth access stratum data set. The receiving unit is further configured to receive first request information from the event consumer application function network element, where the first request information is used to request authorization of the second access stratum data set, and the first request information includes identifier information of the ECAF. The sending unit is further configured to send the first request information to the non-access stratum of the terminal device.

In a possible implementation, the sending unit is further configured to send first acknowledgment information to the event consumer application function network element, where the first acknowledgment information indicates a request result of the third request information.

According to a thirteenth aspect, a wireless communication apparatus is provided. The apparatus includes modules or units configured to perform the method according to any one of the first aspect or the possible implementations of the first aspect.

According to a fourteenth aspect, a wireless communication apparatus is provided. The apparatus includes modules or units configured to perform the method according to any one of the second aspect or the possible implementations of the second aspect.

According to a fifteenth aspect, a wireless communication apparatus is provided. The apparatus includes modules or units configured to perform the method according to any one of the third aspect or the possible implementations of the third aspect.

According to a sixteenth aspect, a wireless communication apparatus is provided. The apparatus includes modules or units configured to perform the method according to any one of the fourth aspect or the possible implementations of the fourth aspect.

According to a seventeenth aspect, a wireless communication apparatus is provided. The apparatus includes modules or units configured to perform the method according to any one of the fifth aspect or the possible implementations of the fifth aspect.

According to an eighteenth aspect, a wireless communication apparatus is provided. The apparatus includes modules or units configured to perform the method according to any one of the sixth aspect or the possible implementations of the sixth aspect.

According to a nineteenth aspect, a communication device is provided. The device includes a processor. The processor is coupled to a memory, to perform the method according to any one of the first aspect to the sixth aspect and any one of the possible implementations of the first aspect to the sixth aspect. In a possible implementation, the communication device further includes the memory. In a possible implementation, the communication device further includes a communication interface, and the processor is coupled to the communication interface. In a possible implementation, the communication device further includes a communication interface, and the processor is coupled to the communication interface.

In an implementation, the communication device is a terminal device. When the communication device is the terminal device, the communication interface may be a transceiver or an input/output interface. In a possible implementation, the transceiver may be a transceiver circuit. In a possible implementation, the input/output interface may be an input/output circuit.

In another implementation, the communication device is a network device. When the communication device is the network device, the communication interface may be a transceiver or an input/output interface. In a possible implementation, the transceiver may be a transceiver circuit. In a possible implementation, the input/output interface may be an input/output circuit.

In another implementation, the communication device is a data collection application function network element. When the communication device is the data collection application function network element, the communication interface may be a transceiver or an input/output interface. In a possible implementation, the transceiver may be a transceiver circuit. In a possible implementation, the input/output interface may be an input/output circuit.

In another implementation, the communication device is an event consumer application function network element. When the communication device is the data collection application function network element, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twentieth aspect, a communication apparatus is provided. The apparatus includes an input circuit, an output circuit, and a processing circuit. The processing circuit is configured to: receive a signal through the input circuit, and transmit a signal through the output circuit, to implement the method according to any one of the first aspect to the sixth aspect and any one of the possible implementations of the first aspect to the sixth aspect.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal output by the output circuit may be output to and transmitted by, for example, but not limited to, a transmitter. The input circuit and the output circuit may be different circuits, or may be a same circuit, and in this case, the circuit is used as the input circuit and the output circuit respectively at different moments. Specific implementations of the processor and the various circuits are not limited in embodiments of this application.

According to a twenty-first aspect, a processing apparatus is provided. The apparatus includes a processor and a memory. The processor is configured to: read instructions stored in the memory, receive a signal through a receiver, and transmit a signal through a transmitter, to perform the method according to any one of the first aspect to the sixth aspect and any one of the possible implementations of the first aspect to the sixth aspect.

In a possible implementation, there are one or more processors, and there are one or more memories.

In a possible implementation, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in embodiments of this application.

It should be understood that, a related data exchange process, for example, sending of indication information may be a process of outputting the indication information from the processor, and receiving of capability information may be a process of receiving and inputting the capability information by the processor. Specifically, data that is processed and output may be output to the transmitter, and input data received by the processor may be from the receiver. The transmitter and the receiver may be collectively referred to as a transceiver.

The processor in the foregoing aspect may be a chip, and the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a twenty-second aspect, a computer program product is provided. The computer program product includes a computer program (which may also be referred to as code or instructions). When the computer program is run, a computer is caused to perform the method according to any one of the first aspect to the sixth aspect and any one of the possible implementations of the first aspect to the sixth aspect.

According to a twenty-third aspect, a computer-readable medium is provided. The computer-readable medium stores a computer program (which may also be referred to as code or instructions). When the computer program is run on a computer, the computer is caused to perform the method according to any one of the first aspect to the sixth aspect and any one of the possible implementations of the first aspect to the sixth aspect.

According to a twenty-fourth aspect, a chip system is provided. The system includes a memory and a processor. The memory is configured to store a computer program, and the processor is configured to invoke the computer program from the memory and run the computer program, to cause a communication device on which the chip system is installed to perform the method according to any one of the first aspect to the sixth aspect and the possible implementations of first aspect to the sixth aspect.

The chip system may include an input circuit or interface configured to send information or data, and an output circuit or interface configured to receive information or data.

According to a twenty-fifth aspect, a communication system is provided. The system includes at least one of the foregoing data collection application function network element, the event consumer application function network element, the network device, and the terminal device.

### BRIEF DESCRIPTION OF DRAWINGS

FIG. 1 is a diagram of an example of a communication system to which this application is applicable;
FIG. 2 is a diagram of an architecture of an access network device according to an embodiment of this application;
FIG. 3 is a diagram of an AI application framework according to an embodiment of this application;
FIG. 4 is a diagram of another AI application framework according to an embodiment of this application;
FIG. 5 is a schematic flowchart of AI model lifecycle management according to an embodiment of this application;
FIG. 6 is a schematic flowchart of a data collection verification method according to an embodiment of this application;
FIG. 7 is a schematic flowchart of another data collection verification method according to an embodiment of this application;
FIG. 8 is a schematic flowchart of still another data collection verification method according to an embodiment of this application;
FIG. 9 is a block diagram of a communication apparatus according to an embodiment of this application;
FIG. 10 is a block diagram of a communication apparatus according to an embodiment of this application; and
FIG. 11 is a block diagram of a chip system according to an embodiment of this application.

### DESCRIPTION OF EMBODIMENTS

The following describes technical solutions of this application with reference to the accompanying drawings.

The technical solutions in embodiments of this application may be applied to various communication systems, for example, a global system of mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a wireless fidelity (wireless fidelity, Wi-Fi) system, a device-to-device (device-to-device, D2D) communication system, a vehicle-to-everything (vehicle-to-everything, V2X) communication system, a universal mobile telecommunications system (Universal Mobile Telecommunications System, UMTS), a worldwide interoperability for microwave access (Worldwide Interoperability for Microwave Access, WiMAX) communication system, a machine to machine (machine to machine, M2M) system, a machine type communication (machine type communication, MTC) system, an internet of things (internet of things, IoT) communication system, a non-terrestrial network (non-terrestrial network, NTN) system, a 5th generation (5th Generation, 5G) mobile communication system, a 6th generation (6th generation, 6G) mobile communication system, a new radio (New Radio, NR) system, or a future wireless communication system.

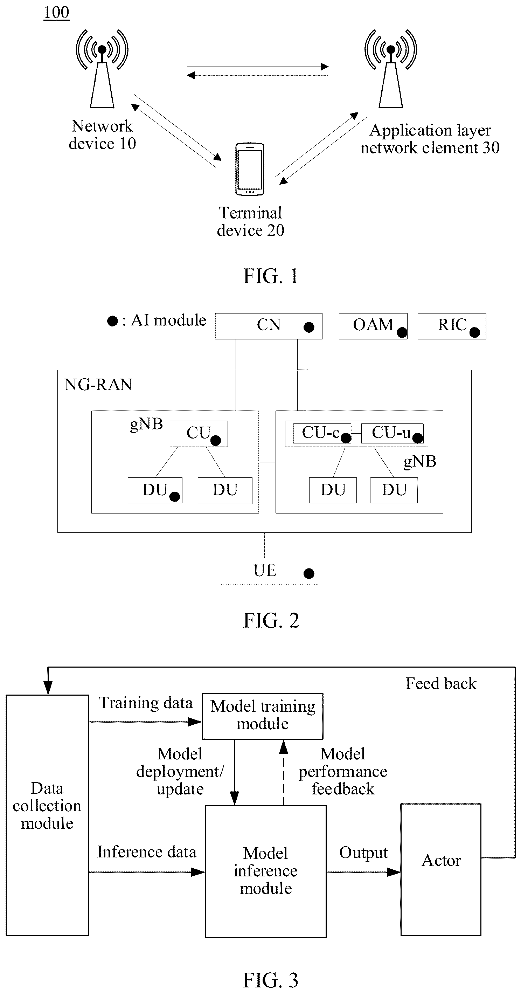

FIG. 1 is a diagram of a communication system 100 according to an embodiment of this application. As shown in FIG. 1, the communication system 100 includes a network device 10, a terminal device 20, and an application layer network element 30. In the communication system, the terminal device 20 may send uplink data/signal/information to the network device 10, and the network device 10 may send downlink data/signal/information to the terminal device 20. Optionally, data/signal/information transmission may be performed between the network device 10 and the application layer network element 30. Optionally, data/signal/information transmission may be performed between the terminal device 20 and the application layer network element 30.

A communication method provided in embodiments of this application may further relate to a device or a transmission node that is not shown in FIG. 1. This is not limited in embodiments of this application.

The communication system used in embodiments of this application is merely an example for description, and the communication system applicable to embodiments of this application is not limited thereto. Any communication system that can implement functions of the foregoing devices is applicable to embodiments of this application.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and that need to work with other devices such as smartphones, for example, various smart bands or smart jewelry for monitoring physical signs.

In addition, the terminal device may alternatively be a terminal device in an internet of things (internet of things, IoT) system. An IoT is an important part of future development of information technologies. A main technical feature of the IoT is to connect an object to a network by using a communication technology, to implement an intelligent network for human-machine interconnection and thing-thing interconnection.

It should be understood that a specific form of the terminal device is not limited in this application.

The network device may be a device in a wireless network, and may also be referred to as an operator device in this application. For example, the network device may be a device that is deployed in a wireless network and that provides a wireless communication function for the terminal device. For example, the network device may be a radio access network (radio access network, RAN) node that connects the terminal device to the wireless network. The RAN may be connected to a core network (for example, a long term evolution (long term evolution, LTE) core network, or a 5G core network).

The network device in embodiments of this application may be an access network device, including but not limited to various base stations such as a next generation NodeB (gNodeB, gNB), an evolved NodeB (evolved NodeB, eNB), or a base station device in a future evolved communication system, or may be a server, a wearable device, a vehicle-mounted device, a wireless relay node, a wireless backhaul node, a transmission point (transmission point, TP), or a transmission reception point (transmission reception point, TRP), or may be one or a group of antenna panels (including a plurality of antenna panels) of a base station, or may be a network node that forms a base station, for example, a baseband unit (BBU) or a distributed unit (distributed unit, DU). The base station may be a macro base station, a micro base station, a pico base station, a small cell, a relay station, a balloon station, or the like.

The network device in embodiments of this application may alternatively be a core network device, including but not limited to: an access and mobility management function (access and mobility management function, AMF) network element, a session management function (session management function, SMF) network element, a user plane function (user plane function, UPF) network element, a policy control function (policy control function, PCF) network element, a unified data management function UDM network element, or the like.

The application layer network element refers to a network device that is responsible for processing an application layer protocol in a computer network, including but not limited to: a data collection application function (Data Collection AF, DCAF) network element, a provisioning application function (provisioning AF, PAF) network element, an event consumer application function (Event Consumer AF, ECAF) network element, and the like.

It may be understood that all or some functions of the network device or the terminal device in this application may alternatively be implemented by using a software function running on hardware, or may be implemented by using an instantiated virtualisation function on a platform (for example, a cloud platform).

FIG. 2 is a diagram of an architecture of an access network device according to an embodiment of this application. As shown in FIG. 2, a network device in embodiments of this application may be a central unit (central unit, CU)-distributed unit (distributed unit, DU) split architecture. It may be understood that the network device is divided into the CU and the DU from a perspective of a logical function. The CU and the DU may be physically separated or deployed together. A plurality of DUs may share one CU. One DU may alternatively be connected to a plurality of CUs (not shown in FIG. 2). The CU and the DU may be connected through an interface, for example, an F1 interface. The CU and the DU may be divided based on a protocol layer of a wireless network. In a possible division manner, the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that processing function division of the CU and the DU based on protocol layers is merely an example, and the CU and the DU may alternatively be divided in another division manner. For example, the CU or the DU may be divided to have functions of more protocol layers than those in the foregoing division manner. For example, the CU or the DU may alternatively be divided to have some processing functions of protocol layers in the foregoing division manner.

In a design, some functions of an RLC layer and functions of a protocol layer above the RLC layer are set on the CU, and remaining functions of the RLC layer and functions of a protocol layer below the RLC layer are set on the DU.

In another design, division of functions of the CU or the DU may be performed based on service types or other system requirements. For example, division is performed based on a delay. Functions whose processing time meets a delay requirement are set on the DU for implementation, and functions whose processing time does not meet the delay requirement are set on the CU for implementation.

In another design, the CU may alternatively have one or more functions of the core network. One or more CUs may be disposed together or separately. For example, the CUs may be disposed on a network side for ease of centralized management. The DU may have a plurality of radio frequency functions, or the radio frequency functions may be disposed remotely.

The functions of the CU may be implemented by one entity or different entities. For example, the functions of the CU may be further divided. For example, a control plane (control plane, CP) and a user plane (user plane, UP) are separated, namely, a CU control plane (CU-CP) and a CU user plane (CU-UP). The CU control plane, namely, the CU-CP, may further include an architecture in which the CU-CP is further divided. To be specific, the CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In different systems, the CU (including the CU-CP and the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. This is not limited in this application.

An AI module is a module with a machine learning computing capability. As shown in FIG. 2, in a wireless communication system, the AI module may be located in operations, administration and maintenance (operations, administration and maintenance, OAM), or may be located in a gNB (for example, if the gNB uses a split architecture, the AI module may be located in the CU/DU), or may be located in a terminal device, or may independently function as a network element entity, for example, a RAN intelligent controller (RAN Intelligent Controller, RIC). A main function of the AI module in the wireless communication system is to perform a series of AI computation such as model establishment, training approximation, and reinforcement learning based on input data (in the wireless communication system, the input data is usually network running data provided by the access network device or monitored by the OAM, for example, network load, channel quality, or a user plane data transmission status provided by a core network). A trained model provided by the AI module has a prediction function for a network change on a RAN side, and may be used for load prediction, terminal device path prediction, CSI prediction, optimal beam prediction, positioning prediction, and the like. In addition, the AI module may further perform policy inference from perspectives of network energy saving, mobility optimization, and the like based on a result of predicting RAN network performance by the trained model, to obtain an appropriate and efficient energy saving policy, mobility optimization policy, and the like. When the AI model is located in the CU, and the CP and the UP of the CU are separated, the CP may be responsible for receiving the AI model and responsible for subsequent AI inference and policy generation functions. When the CU-CP is further divided into the CU-CP 1 and the CU-CP 2, the CU-CP 1 may be responsible for receiving the AI model and the subsequent inference function of the AI model, and generating specific interaction signaling, and the CU-CP 2 sends the signaling. When the AI module is located in the OAM, a current northbound interface may be reused for communication between the AI module and the gNB on the RAN side. When the AI module is located in the gNB or the CU, a current F1 interface, Xn interface, Uu interface, or the like may be reused. When the AI module is independently a network entity, a communication link, for example, a wired link or a radio link, to an OAM side, the RAN side, or the like needs to be re-established.

FIG. 3 is a diagram of an AI application framework according to an embodiment of this application. As shown in FIG. 3, the AI application framework includes a data collection module, a model training module, a model inference module, and an actor (Actor).

The model training module and the model inference module are examples of an AI module. For example, the network device and the terminal device shown in FIG. 1, and the CU, the DU, or another management entity of the gNB shown in FIG. 2 may input data to the data collection module. The data collection module may be used as a database for AI model training and data analysis and inference. The model training module analyzes training data that is output by the data collection module, provides an available AI model, and deploys the obtained AI model in the model inference module. The model inference module provides, for network running based on inference data that is output by the data collection module, appropriate prediction based on the AI model (obtained by the model training module through training), and feeds back performance data of the AI model to the model training module. Subsequently, the model training module continues to train the model based on the performance data that is fed back, and notifies the model inference module of an updated AI model. Alternatively, the model inference module indicates a network to perform policy adjustment based on the inference data that is output by the data collection module and the AI model. Related policy adjustment is planned by the actor in a unified manner, and policies are sent to a plurality of network entities for running. In addition, after a related policy is applied, specific performance of the network is fed back to the data collection module for storage.

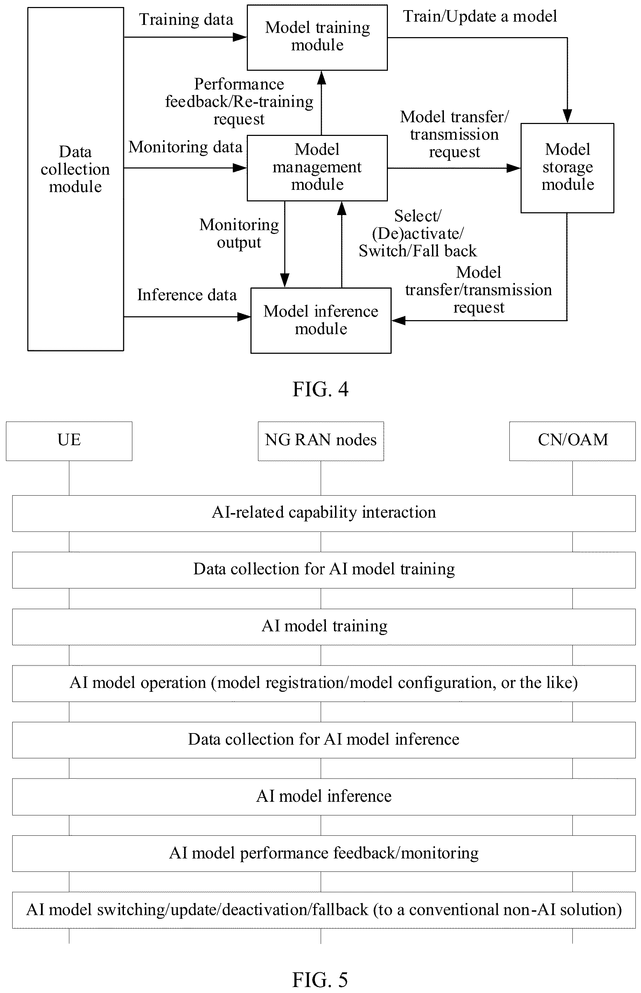

FIG. 4 is a diagram of another AI application framework according to an embodiment of this application. As shown in FIG. 4, the framework includes a data collection module, a model training module, a model management module, a model inference module, and a model storage module.

The model management module interacts with and manages other modules, and the model storage module is configured to store and manage an AI model.

FIG. 5 is a schematic flowchart of AI model lifecycle management (Lifecycle Management, LCM) according to an embodiment of this application.

For different use cases, there may be different overall LCM signaling procedures. A procedure shown in FIG. 5 is merely an example. A specific LCM procedure is not limited in this application.

The 3rd generation partnership project (3rd generation partnership project, 3GPP) introduces a plurality of AI application scenarios on a RAN side. AI application on the RAN side includes but is not limited to the following application scenarios: energy saving (energy saving), load balancing (load balancing), mobility optimization (mobility optimization), channel state information-reference signal (channel state information-reference signal, CSI-RS) feedback enhancement, beam management enhancement (beam management enhancement, BME), positioning enhancement, and the like. These application scenarios may also be referred to as AI use cases (use cases).

For example, the AI may be used for CSI feedback enhancement. CSI is a channel attribute of a communication link. UE reports downlink channel quality information to a gNB, so that the base station selects a more appropriate modulation and coding scheme (Modulation and Coding Scheme, MCS) for the UE. Based on a latest progress of a RAN1 meeting, two AI-based sub-use cases, namely, CSI compression and CSI prediction (with a low priority) are approved. CSI compression is based on a two-sided model (where an encoder (and a quantizer) on a UE side is configured to compress the CSI, and a decoder (and a dequantizer) on a gNB side is configured to decompress the CSI; and an AI-based encoder and decoder may be implemented by using AI models such as a convolutional neural network (Convolutional Neural Network, CNN) and an AI model (Transformer) whose model training speed is increased by using an attention mechanism).

For example, the AI may be further used for beam management (beam management, BM), and the BM is mainly to discover a strongest transmit/receive beam pair (beam pair). AI/ML-based sparse beam prediction aims to improve accuracy of optimal beam prediction. In a training phase, a network scans all possible beams, and then the network needs to notify the UE of a transmit beam pattern. When model training is completed, the network needs to scan only a small part of beams, and then the UE feeds back top K narrow beams (for example, K beams with best receive power) obtained through inference to the network.

For example, the AI may be further used for positioning accuracy enhancement (Positioning accuracy enhancement). In R17, LOS/NLOS indication reporting is supported, to improve positioning accuracy. AI/ML-based LOS/NLOS identification can improve positioning accuracy with a small quantity of transmission reception point (Transmission Reception Point, TRP) antennas. In an indoor scenario (a heavy NLOS scenario), there may be an insufficient quantity of line-of-sight paths. As a result, a conventional approach cannot work well. Therefore, AI-based positioning can improve positioning accuracy in the indoor scenario.

In the foregoing AI application scenarios, input of the AI model is access stratum data. For example, in a CSI compression scenario, input of the model is a CSI-RS measurement result including CSI reporting at an access stratum. Permission management is needed when UE data is collected.

However, in the foregoing AI application scenarios, the input of the AI model is AS data of the UE. Because the AS stratum data is usually collected by an operator and the operator has permission to process the AS stratum data, a current AAS authorization mechanism cannot be directly used. In addition, there is no related authorization mechanism for the AS stratum data. As a result, when the AS stratum data is collected, the AS data may be inappropriately exposed to a third-party ECAF node due to lack of authorization.

This application provides a plurality of AS data collection verification methods. For a scenario in which the AS data of the UE is collected, an authorization mechanism for the collected AS data is introduced, to ensure that the AS stratum data can be appropriately collected under permission control.

It should be understood that descriptions of specific scenarios in embodiments of this application are merely examples. In addition to the foregoing described application scenarios, the methods provided in embodiments of this application are also applicable to an application scenario in which a similar problem exists.

In the descriptions of embodiments of this application, unless otherwise stated, "a plurality" or "a plurality of items" means two or more. In addition, "at least one" may be replaced with "one or more".

Ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. For example, first indication information and second indication information may be same information, or may be different information. In addition, such names do not indicate that the two messages are different in content, sizes, application scenarios, transmit ends/receive ends, priorities, importance degrees, or the like. In addition, step numbers in embodiments described in this application are merely intended to distinguish between different steps, but are not intended to limit a sequence of the steps.

In this application, the terms "include" and "have" and any other variants thereof are intended to cover a non-exclusive inclusion. For example, a process, method, system, product, or device that includes a list of steps or units is not necessarily limited to those clearly listed steps or units, but may include other steps or units that are not clearly listed or inherent to the process, method, product, or device.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

It should be understood that names of all nodes and messages in this application are merely names specified for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

The following describes in detail a plurality of methods provided in embodiments of this application with reference to the accompanying drawings.

It should be understood that the step numbers in embodiments of this application are merely used for description, and do not limit a sequence of steps.

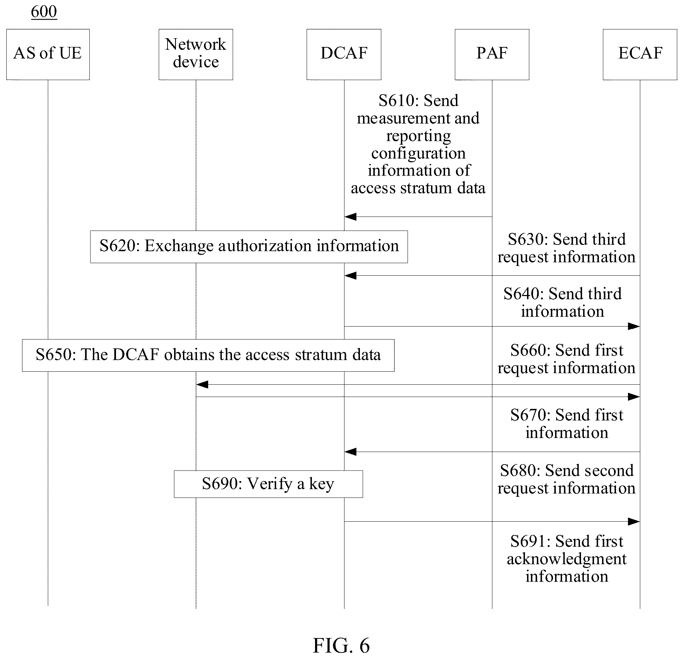

FIG. 6 shows a data collection verification method 600 according to this application. Permission management for collection of AS data of UE is performed by using the method. The method in FIG. 6 includes at least a part of the following content.

S610: A PAF sends measurement and reporting configuration information of the access stratum data to a DCAF.

S620: The DCAF exchanges authorization information with a network device.

S630: An ECAF sends third request information to the DCAF, where the third request information is used to request a fifth access stratum data set.

S640: The DCAF sends third information to the ECAF, where the third information indicates that a second access stratum data set needs to be authorized by the network device.

S650: The DCAF obtains the access stratum data.

S660: The ECAF sends first request information to the network device, where the first request information is used to request authorization of the second access stratum data set.

S670: The network device sends first information to the ECAF, where the first information indicates a first key.

S680: The ECAF sends second request information to the DCAF, where the second request information is used to request a third access stratum data set, and the second request information includes the first information.

S690: The network device verifies the first key with the DCAF.

S691: The DCAF sends subscription acknowledgment information (namely, an example of first acknowledgment information) to the ECAF.

According to the foregoing solution, the ECAF can obtain collected AS measurement data from the DCAF only after being authorized by an operator device. This ensures that an operator performs permission management on AS data collection, and avoids a case in which the AS data is directly exposed to another network node on a non-AS stratum.

The following describes S610 to S690 in detail.

First, the DCAF needs to register with an NRF (Network Repository Function, network repository function). The DCAF initiates registration to the NRF. Registration information includes a series of event IDs. Data collection results of events corresponding to these IDs can be provided to the ECAF after being authorized.

It should be noted that, unless otherwise specified, in this application, an access stratum is an access stratum of a terminal device, the access stratum data is a measurement result of access stratum data of the terminal device, and the non-access stratum is a non-access stratum of the terminal device.

In S610, the PAF sends the measurement and reporting configuration information of the access stratum data to the DCAF.

Specifically, the measurement and reporting configuration information may include: data that needs to be collected, configuration of data collection (for example, a sampling frequency and a geographical limitation of the collection), a reporting frequency and format of collected data, and how the DCAF processes the data and sends the data to a corresponding subscriber (also referred to as an event consumer).

In an implementation, collected data information may include one or more of the following: information indicating an artificial intelligence AI function corresponding to access stratum data (where the AI function may include, but is not limited to, one or more functions of CSI compression, CSI prediction, BM, and positioning), information about a target frequency measured by the UE, information about a reference signal type measured by the UE (indicating, for example, an SSB and/or CSI), information about a channel quality type measured by the UE (for example, RSRP/RSRQ/an SINR), indication information collected and reported by a physical layer L1 and/or a network layer L3 of the UE, information about a scenario in which access stratum data needs to be collected (for example, a specific region, a cell, or cell configuration), and information about a maximum quantity of reported beams (indicating, for example, a measurement result of four/six/several beams).

It should be noted that a relationship between an AS stratum data collection requirement and the event ID is not limited in this application. In other words, one event ID may include both a non-AS stratum data collection requirement and an AS stratum data collection requirement; or one event ID may include only an AS stratum data collection requirement.

In S620, the DCAF exchanges the authorization information with the network device.

First, the DCAF needs to first send a data collection requirement to the network device. The data collection requirement includes event information including AS data collection and related data collection configuration (namely, the measurement and reporting configuration information of the access stratum data).

After receiving the measurement and reporting configuration information of the access stratum data, the network device determines, based on the event information in the measurement and reporting configuration information, whether an event related to the AS data needs to be granted permission before being provided to another ECAF.

The operator device may indicate the authorization information (namely, an example of first indication information) to the DCAF in any one of the following manners. The first indication information indicates that access stratum data in a first access stratum data set can be provided for another network element only after the access stratum data is authorized.

### Manner 1

Indication is performed based on different events.

To be specific, the first indication information sent by the network device to the DCAF indicates whether access stratum data corresponding to each event in the first access stratum data set needs to be authorized before the access stratum data is provided to another ECAF.

Optionally, when the network device has a plurality of device entities, the authorization information may further indicate an identifier of a target network device entity by which each event ID needs to be authorized.

### Manner 2

Overall indication is performed.

To be specific, the network device sends the first indication information to the DCAF, to indicate that access stratum data corresponding to any event including the AS data can be provided to another ECAF only after the access stratum data is authorized by the network device. In this case, the first access stratum data set includes access stratum data corresponding to all events including the AS data.

Optionally, when the network device has a plurality of device entities, the authorization information may further indicate an identifier of a target network device entity that needs to perform authorization.

Manner 3: Authorization is required by default. To be specific, it is considered by default that the DCAF needs to indicate the ECAF to be authorized by the network device when subsequently receiving, from the ECAF, any subscription information including the AS data. In this case, the first access stratum data set includes all AS data.

Optionally, when the operator device has a plurality of device entities, the authorization information may further indicate an identifier of a target operator device entity that needs to perform authorization.

In S630, the ECAF sends the third request information to the DCAF, where the third request information is used to request the fifth access stratum data set.

In an implementation, the third request information includes target UE information (for example, a UE ID, an IP address of the UE, or an ID of a UE cluster, and any identifier information that may indicate specific UE) corresponding to measurement, a measurement event ID (which may be an event ID or a group of event IDs), and configuration of measurement result reporting (event-based/periodic reporting, reporting duration, a maximum quantity of reporting times, and the like).

It should be understood that, in the third request information, the ECAF may further send model-related subscription information to the DCAF, to request a measurement result needed for locally training a model by the event consumer application function network element. For example, it may indicate that a local model is to be trained, and function information (for example, measurement information corresponding to a CSI compression function) corresponding to the model to be trained by the event consumer application function network element is included.

In S640, the DCAF sends the third information to the ECAF, where the third information indicates that the second access stratum data set needs to be authorized by the network device.

After receiving the third request information sent by the ECAF, the DCAF may determine, based on the first indication information, that the fifth access stratum data set includes a part of access stratum data that needs to be authorized, where the part of the data is the second access stratum data set.

It should be understood that the second access stratum data set includes all or a part of data in the fifth access stratum data set, or the second access stratum data set is a subset of the fifth access stratum data set.

It should be understood that, because the second access stratum data set includes all or a part of the data in the first access stratum data set, the DCAF determines that for the second access stratum data set from the network device, authorization needs to be applied for.

Optionally, the third information includes first identifier information, and the first identifier information includes an identifier of the network device.

In S650, the DCAF obtains the access stratum data.

In this step, the DCAF needs to obtain the AS data of the UE. Specifically, the DCAF may send the AS data collection requirement to the network device, and the network device delivers AS data collection configuration to the UE; or the DCAF may send the AS data collection requirement to a non-AS stratum of the UE, and the non-AS stratum of the UE collects data. A specific procedure is not described herein.

In S660, the ECAF sends the first request information to the network device, where the first request information is used to request the authorization of the second access stratum data set.

In step S640, the ECAF learns, based on the third information, that the ECAF needs to be authorized by a specific network device, and obtains the identifier of the network device based on the first identifier information.

Therefore, the ECAF may send the first request information to the network device based on the identifier of the network device.

The first request information may include one or more of the following information: identifier information of the ECAF, requirement indication information of collecting the AS data by the ECAF, event ID information for which the ECAF requests authorization and that includes the AS data collection requirement, a specific data collection requirement related to the AS in event data collection, estimated collection duration or a deadline of event data, a purpose/range of the event data collection (for example, a PLMN and an NID/PNI-NPN), and the like.

In S670, the network device sends the first information to the ECAF, where the first information indicates the first key, the first key is used for the authorization of the third access stratum data set, and the third access stratum data set includes all or the part of data in the second access stratum data set.

It should be understood that when the ECAF applies to the network device for the authorization of the second access stratum data set, not all the data can be authorized. Therefore, optionally, the third access stratum data set is a subset of the second access stratum data set.

In an implementation, in addition to the first key, the first information further includes description (claim) information corresponding to the first key. The claim information includes one or more of the following: the identifier information of the ECAF, event ID information corresponding to the first key, a specific AS data collection requirement corresponding to the first key, validity time or a deadline corresponding to the first key, and a use range of the first key (for example, a PLMN and an NID/PNI-NPN). In addition, it is assumed that the operator device may further feed back a plurality of first keys to the ECAF, and indicate the foregoing information by distinguishing between the first keys.

In an implementation, for data that cannot be authorized in the second access stratum data set, third indication information may also be sent to the ECAF. The third indication information indicates that a part of the access stratum data in the second access stratum data set is not authorized, and the third indication information includes reason information used to feed back a reason why authorization cannot be performed, for example, protection of AS data privacy.

In S680, the ECAF sends the second request information to the DCAF, where the second request information is used to request the third access stratum data set, the second request information includes the first information, and the first information indicates the first key.

The ECAF initiates, to the DCAF based on the authorization information obtained from the operator device, a subscription request including the AS data collection. The subscription request includes the first key obtained in step S670.

In S690, the network device verifies the first key with the DCAF.

Specifically, the DCAF needs to first send the obtained first key to the network device (by sending the first information), to determine, based on verification information sent by the network device (namely, an example of the second information, where the second information indicates a verification result of the first key), whether the third access stratum data set corresponding to the first key can be sent to the ECAF.

In S691, the DCAF sends the subscription acknowledgment information to the ECAF.

It should be understood that, after verification of the first key succeeds, the DCAF sends the subscription acknowledgment message to the ECAF, to notify the ECAF that the verification succeeds, so that the DCAF sends, to the ECAF, the authorized AS stratum data (namely, the third access stratum data set) in the subscription request. After receiving the AS stratum data, the ECAF may send subscription cancellation indication information to the DCAF to end the AS data collection.

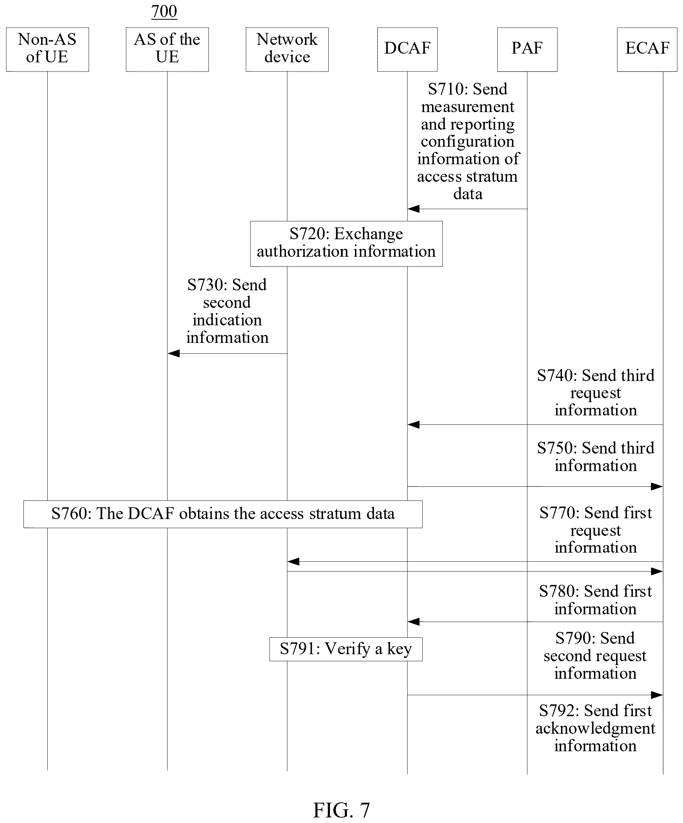

FIG. 7 shows a communication method 700 according to this application. Permission management for collection of AS data of UE is performed by using the method. The method in FIG. 7 includes at least a part of the following content.

S710: A PAF sends measurement and reporting configuration information of the access stratum data to a DCAF.

S720: The DCAF exchanges authorization information with a network device.

S730: The network device sends second indication information to an AS stratum of the UE.

S740: An ECAF sends third request information to the DCAF, where the third request information is used to request a fifth access stratum data set.

S750: The DCAF sends third information to the ECAF, where the third information indicates that a second access stratum data set needs to be authorized by the network device.

S760: The DCAF obtains the access stratum data.

S770: The ECAF sends first request information to the network device, where the first request information is used to request authorization of the second access stratum data set.

S780: The network device sends first information to the ECAF, where the first information indicates a first key.

S790: The ECAF sends second request information to the DCAF, where the second request information is used to request a third access stratum data set, the first key is used for authorization of the third access stratum data set, and the third access stratum data set includes all or a part of data in the second access stratum data set.

S791: The network device verifies the first key with the DCAF.

S792: The DCAF sends subscription acknowledgment information to the ECAF.

According to the foregoing solution, the network device may configure additional measurement for the AS stratum of the UE based on a data collection request sent by the AS stratum of the UE from a non-AS stratum, to extend a data collection range. In addition, the network device exchanges the authorization information with the AS stratum of the UE, to ensure that an AS data exposure range of the UE is controllable.

The following describes S710 to S790 in detail.

For steps S710 and S720, refer to steps S610 and S620.

In S730, the network device sends the second indication information to the AS stratum of the UE, where the second indication information indicates that access stratum data in a fourth access stratum data set can be sent to the non-access stratum of the UE.

It should be understood that this solution is applied to a scenario in which the AS data is collected via the non-AS stratum of the UE.

Specifically, the non-AS stratum of the UE sends an AS data collection requirement to the AS stratum of the UE, so that the AS stratum may send the access stratum data to the non-AS stratum. The AS stratum of the UE performs measurement, and there is no strict sequential relationship between the measurement and other steps, that is, the measurement is independently performed by the UE, and is not affected by the data collection request received by the non-AS stratum of the UE.

Because the network device exchanges the authorization information with the AS stratum of the UE, that is, the AS stratum of the UE receives the second indication information sent by the network device, measurement data that is of the AS stratum and that can be sent to the non-AS stratum of the UE can be determined. For example, the network device indicates, to the AS stratum of the UE, data (for example, the fourth access stratum data set) that can be sent to the non-AS stratum of the UE. Indication may be performed by using specific measurement or a corresponding event ID.

Optionally, the second indication information may further include forwarding validity time and an effective region (a PLMN or the like for constraints) of a measurement amount that can be forwarded.

Optionally, the AS stratum of the UE sends, to the network device, the data collection request received from the non-AS stratum, to obtain the second indication information.

Optionally, the network device may deliver additional measurement configuration to the AS stratum of the UE based on the data collection request that is reported by the UE and that is received from the non-AS stratum, to extend a non-AS stratum data collection range of the UE.

For steps S740 to S792, refer to steps S630 to S691.

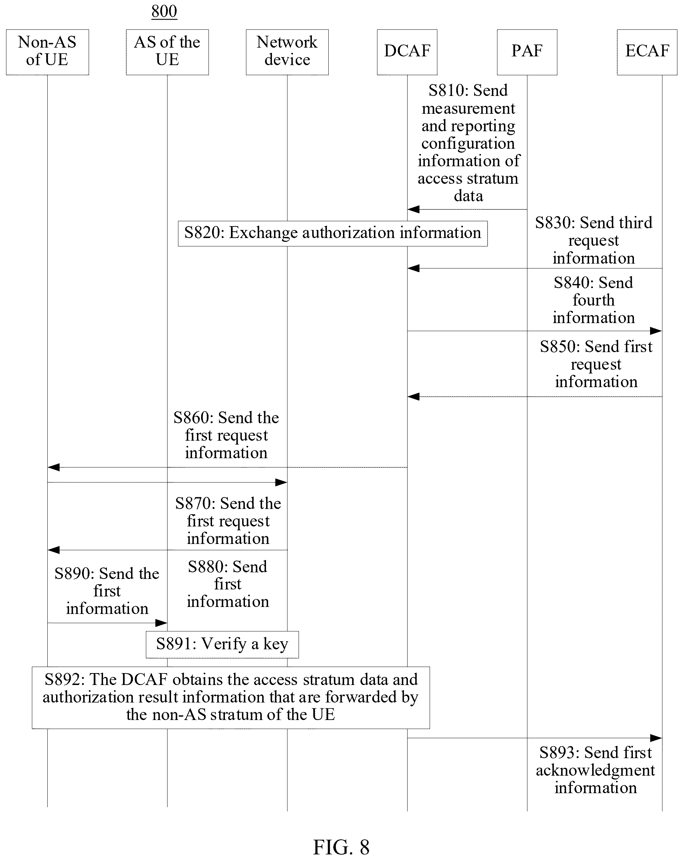

FIG. 8 shows a data collection method 800 according to this application. Permission management for collection of AS data of UE is performed by using the method. The method in FIG. 8 includes at least a part of the following content.

S810: A PAF sends measurement and reporting configuration information of the access stratum data to a DCAF.

S820: The DCAF exchanges authorization information with a network device.

S830: An ECAF sends third request information to the DCAF, where the third request information is used to request a fifth access stratum data set.

S840: The DCAF sends fourth information to the ECAF, where the fourth information indicates that a second access stratum data set needs to be authorized by a non-AS stratum of the UE.

S850: The ECAF sends first request information to the DCAF, where the first request information is used to request authorization of the second access stratum data set.

S860: The DCAF sends the first request information to the non-AS stratum of the UE.

S870: The non-AS stratum of the UE sends the first request information to the network device.

S880: The network device sends first information to the non-AS stratum of the UE, where the first information indicates a first key, the first key is used for authorization of a third access stratum data set, and the third access stratum data set includes all or a part of data in the second access stratum data set.

S890: The non-AS stratum of the UE sends the first information to an AS stratum of the UE.

S891: The network device verifies the first key with the AS stratum of the UE.

S892: The DCAF obtains the access stratum data and authorization result information that are forwarded by the non-access stratum of the UE.

S893: The DCAF sends subscription acknowledgment information to the ECAF.

According to the foregoing solution, an authorization application of the ECAF is forwarded to an operator device by the non-AS stratum of the UE, authorization verification is completed between the UE and the operator device, and an authorization result and a data collection result are sent to the ECAF by the DCAF, to ensure that the AS data is collected under authorization.

The following describes S810 to S891 in detail.

For steps S810 to S830, refer to steps S610 to S630.

In S840, the DCAF sends the fourth information to the ECAF, where the fourth information indicates that the second access stratum data set needs to be authorized by the non-AS stratum of the UE.

Optionally, the fourth information includes second identifier information, and the second identifier information includes an identifier of the UE.

In S850, the ECAF sends the first request information to the DCAF, where the first request information is used to request the authorization of the second access stratum data set.

The first request information may include one or more of the following information: identifier information of the ECAF, requirement indication information of collecting the AS data by the ECAF, event ID information for which the ECAF requests authorization and that includes an AS data collection requirement, a specific data collection requirement related to the AS in event data collection, estimated collection duration or a deadline of event data, a purpose/range of the event data collection (for example, a PLMN and an NID/PNI-NPN), and the like.

In S860, the DCAF sends the first request information to the non-AS stratum of the UE. In S870, the non-AS stratum of the UE sends the first request information to the network device.

Optionally, the DCAF may send, based on target UE indicated by the third request information in S830 and a correspondence, an authorization request to the target UE.

Optionally, the network device may indicate, to the AS stratum of the UE, measurement data that can be sent to the non-AS stratum of the UE. For example, the network device sends second indication information to the AS stratum of the UE, where the second indication information indicates that access stratum data in a fourth access stratum data set can be sent to the non-access stratum of the UE. For details, refer to step S730.

In S880, the network device sends the first information to the non-AS stratum of the UE, where the first information indicates the first key, the first key is used for the authorization of the third access stratum data set, and the third access stratum data set includes all or the part of data in the second access stratum data set.

It should be understood that when the non-AS stratum of the UE applies to the network device for the authorization of the second access stratum data set, not all the data can be authorized. Therefore, optionally, the third access stratum data set is a subset of the second access stratum data set.

In an implementation, in addition to the first key, the first information further includes description (claim) information corresponding to the first key. The claim information includes one or more of the following: the identifier information of the ECAF, event ID information corresponding to the first key, a specific AS data collection requirement corresponding to the first key, validity time or a deadline corresponding to the first key, and a use range of the first key (for example, a PLMN and an NID/PNI-NPN). In addition, it is assumed that the operator device may further feed back a plurality of first keys to the ECAF, and indicate the foregoing information by distinguishing between the first keys.

In an implementation, for data that cannot be authorized in the second access stratum data set, third indication information may also be sent to the non-AS stratum of the UE. The third indication information indicates that a part of the access stratum data in the second access stratum data set is not authorized, and the third indication information includes reason information used to feed back a reason why authorization cannot be performed, for example, protection of AS data privacy.

In S890, the non-AS stratum of the UE sends the first information to the AS stratum of the UE.

The non-AS stratum of the UE initiates, to the DCAF based on the first information obtained from the network device, a subscription request including AS data collection. The subscription request includes the first information obtained in step S880.

In S891, the network device verifies the first key with the AS stratum of the UE.

Specifically, the AS stratum of the UE needs to first send the obtained first key to the network device (by sending the first information), to determine, based on verification information sent by the network device (namely, an example of the second information, where the second information indicates a verification result of the first key), whether the third access stratum data set corresponding to the first key can be sent to the non-AS stratum of the UE.

In S892, the DCAF obtains the access stratum data and the authorization result information that are forwarded by the non-access stratum of the UE.

Specifically, after the verification succeeds, the AS stratum of the UE sends a measurement result (the third access stratum data set) of the access stratum to the non-AS stratum of the UE, and the non-AS stratum of the UE forwards the measurement result to the DCAF.

Optionally, the non-AS stratum of the UE sends the authorization result information to the DCAF, where the authorization result information indicates data that is authorized and data that is not authorized in the second access stratum data set, for example, data in the second access stratum data set that is successfully authorized by the network device via the non-AS stratum. Specifically, the authorization result information indicates events or measurement requirements of specific ECAFs that are authorized, and a reason why authorization is not provided.

In S893, the DCAF sends the subscription acknowledgment information to the ECAF.

It should be understood that after the verification succeeds, the DCAF sends the subscription acknowledgment message to the ECAF, to notify the ECAF that the verification succeeds.

Optionally, the DCAF may send the authorized access stratum data to a corresponding ECAF based on the authorization result information, and may further forward the reason why the part of the data is not authorized.

After receiving the AS stratum data, the ECAF may send subscription cancellation indication information to the DCAF to end the AS data collection.

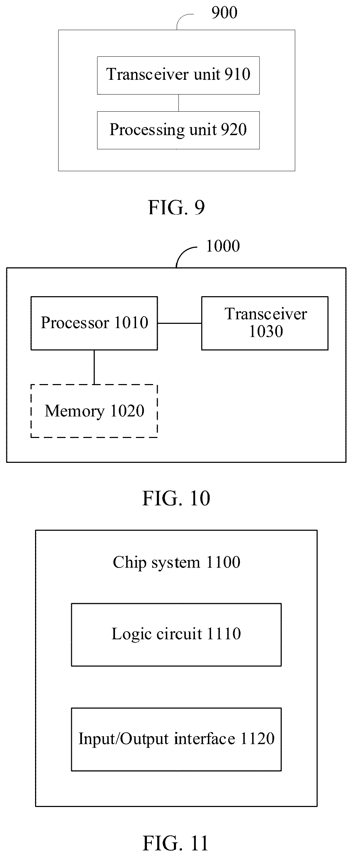

FIG. 9 is a block diagram of a communication apparatus 900 according to an embodiment of this application. The apparatus 900 includes a transceiver unit 910 and a processing unit 920. The transceiver unit 910 may communicate with the outside, and the processing unit 920 is configured to process data. The transceiver unit 910 may also be referred to as a communication interface or a communication unit.

In a possible implementation, the apparatus 900 may further include a storage unit. The storage unit may be configured to store instructions and/or data. The processing unit 920 may read the instructions and/or the data in the storage unit.

The apparatus 900 may be configured to perform actions performed by the network device in the foregoing method embodiments. In this case, the apparatus 900 may be the network device or a component that may be disposed in the network device. The transceiver unit 910 is configured to perform receiving and sending-related operations of the network device in the foregoing method embodiments. The processing unit 920 is configured to perform processing-related operations of the network device in the foregoing method embodiments.

Alternatively, the apparatus 900 may be configured to perform actions performed by the terminal device in the foregoing method embodiments. In this case, the apparatus 900 may be the terminal device or a component that may be disposed in the terminal device. The transceiver unit 910 is configured to perform receiving and sending-related operations on a terminal device side in the foregoing method embodiments. The processing unit 920 is configured to perform processing-related operations on the terminal device side in the foregoing method embodiments.

Alternatively, the apparatus 900 may be configured to perform actions performed by the application layer network element in the foregoing method embodiments. In this case, the apparatus 900 may be the application layer network element or a component that may be disposed in the application layer network element. The transceiver unit 910 is configured to perform receiving and sending-related operations on an application layer network element side in the foregoing method embodiments. The processing unit 920 is configured to perform processing-related operations on the application layer network element side in the foregoing method embodiments.

It should be further understood that the apparatus 900 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the network device, the terminal device, or the application layer network element in the foregoing embodiments, and may be configured to perform procedures and/or steps corresponding to the network device, the terminal device, or the application layer network element in the foregoing method embodiments; or the apparatus 900 may be specifically the network device, the terminal device, or the application layer network element in the foregoing embodiments, and may be configured to perform procedures and/or steps corresponding to the network device, the terminal device, or the application layer network element in the foregoing method embodiments. To avoid repetition, details are not described herein again.

The apparatus 900 in the foregoing solutions has functions of implementing corresponding steps performed by the network device, the terminal device, or the application layer network element in the foregoing methods. The functions may be implemented by hardware, or may be implemented by hardware executing corresponding software. The hardware or the software includes one or more modules corresponding to the foregoing functions. For example, the transceiver unit may be replaced with a transceiver machine (for example, a sending unit in the transceiver unit may be replaced with a transmitter machine, and a receiving unit in the transceiver unit may be replaced with a receiver machine), and another unit, for example, the processing unit, may be replaced with a processor, to separately perform receiving and sending operations and related processing operations in the method embodiments.

In addition, the transceiver unit 910 may alternatively be a transceiver circuit (where for example, the transceiver circuit may include a receiver circuit and a transmitter circuit), and the processing unit may be a processing circuit.

It should be noted that the apparatus in FIG. 9 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

As shown in FIG. 10, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method in the foregoing method embodiments is performed.

In a possible implementation, the communication apparatus 1000 includes one or more processors 1010.

In a possible implementation, as shown in FIG. 8, the communication apparatus 1000 may further include the memory 1020.

In a possible implementation, the communication apparatus 1000 may include one or more memories 1020.

In a possible implementation, the memory 1020 and the processor 1010 may be integrated together, or may be disposed separately, or the processor 1020 may be located outside the communication apparatus 1000.

In a possible implementation, as shown in FIG. 8, the wireless communication apparatus 1000 may further include a transceiver 1030. The transceiver 1030 is configured to receive and/or send a signal. For example, the processor 1010 is configured to control the transceiver 1030 to receive and/or send a signal.

In a solution, the communication apparatus 1000 is configured to implement operations performed by the network device in the foregoing method embodiments.

For example, the processor 1010 is configured to perform processing-related operations performed by the network device in the foregoing method embodiments. The transceiver 1030 is configured to perform receiving and sending-related operations performed by the network device in the foregoing method embodiments.

In another solution, the communication apparatus 1000 is configured to implement operations performed by the terminal device in the foregoing method embodiments.

For example, the processor 1010 is configured to perform processing-related operations performed by the terminal device in the foregoing method embodiments. The transceiver 1030 is configured to perform receiving and sending-related operations performed by the terminal device in the foregoing method embodiments.

In a still solution, the communication apparatus 1000 is configured to implement operations performed by the application layer network element in the foregoing method embodiments.

For example, the processor 1010 is configured to implement processing-related operations performed by the application layer network element in the foregoing method embodiments, and the transceiver 1030 is configured to implement receiving and sending-related operations performed by the application layer network element in the foregoing method embodiments.

As shown in FIG. 11, an embodiment of this application provides a chip system 1100. The chip system 1100 (which may also be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, to cause the chip system 1100 to implement the methods and functions in embodiments of this application. The input/output interface 1120 may be an input/output circuit in the chip system 1100, and outputs information processed by the chip system 1100, or inputs to-be-processed data or signaling information into the chip system 1100 for processing.

In a solution, the chip system 1100 is configured to implement operations performed by the network device, the terminal device, or the application layer network element in the foregoing method embodiments.

For example, the logic circuit 1110 is configured to implement processing-related operations performed by the network device in the foregoing method embodiments, and the input/output interface 1120 is configured to implement sending and/or receiving-related operations performed by the network device in the foregoing method embodiments.

An embodiment of this application further provides a computer-readable storage medium. The computer-readable storage medium stores computer instructions for implementing the method performed by the terminal device or the method performed by the satellite in the foregoing method embodiments.

For example, when the computer program is executed by a computer, the computer is caused to implement the method performed by the terminal device, the method performed by the network device, or the method performed by the application layer network element in the foregoing method embodiments.

An embodiment of this application further provides a computer program product including instructions. When the instructions are executed by a computer, the computer is caused to implement the method performed by the network device, the method performed by the terminal device, or the method performed by the application layer network element in the foregoing method embodiments.

An embodiment of this application further provides a communication system. The communication system includes one or more of the network device, the terminal device, or the application layer network element in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution entity of the method provided in embodiments of this application is not particularly limited in embodiments of this application, provided that communication can be performed according to the method provided in embodiments of this application by running a program that records code of the method provided in embodiments of this application. For example, the execution entity of the method provided in embodiments of this application may be a terminal device or a satellite, or may be a functional module that is in the terminal device or the satellite and that can invoke and execute the program.

Aspects or features in embodiments of this application may be implemented as a method, an apparatus, or a product that uses standard programming and/or engineering technologies. As used herein, the term "artificial article" may encompass a computer program accessible from any computer-readable device, carrier, or medium. For example, a computer-readable medium may include, but is not limited to: a magnetic storage device (for example, a hard disk drive, a floppy disk, or a magnetic tape), an optical disc (for example, a compact disc (compact disc, CD), or a digital versatile disc (digital versatile disc, DVD)), a smart card, and a flash storage device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include, but is not limited to: radio channels and various other media that can store, include, and/or carry instructions and/or data.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. Through example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or a part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A data collection verification method, comprising:
sending, by a network device, first indication information to a data collection application function network element, wherein the first indication information indicates that access stratum data in a first access stratum data set of a terminal device can be provided to another network element only after the access stratum data is authorized;
receiving, by the network device, first request information from an event consumer application function network element or a non-access stratum of the terminal device, wherein the first request information is used to request authorization of a second access stratum data set, and the second access stratum data set comprises all or a part of the data in the first access stratum data set;
sending, by the network device, first information to the event consumer application function network element or the non-access stratum of the terminal device, wherein the first information indicates a first key, the first key is used for authorization of a third access stratum data set, and the third access stratum data set comprises all or a part of data in the second access stratum data set;
receiving, by the network device, the first information from the data collection application function network element or an access stratum of the terminal device; and
sending, by the network device, second information to the data collection application function network element or the access stratum of the terminal device, wherein the second information indicates a verification result of the first key.

2. The method according to claim 1, wherein the method further comprises:
sending, by the network device, the second indication information to the access stratum of the terminal device, wherein the second indication information indicates that access stratum data in a fourth access stratum data set can be sent to the non-access stratum of the terminal device.

3. The method according to claim 1 or 2, wherein the method further comprises:
sending, by the network device, third indication information to the event consumer application function network element or the non-access stratum of the terminal device, wherein the third indication information indicates that a part of the access stratum data in the second access stratum data set is not authorized, the third indication information comprises reason information, and the reason information indicates a reason why a request for the part of the access stratum data is not authorized.

4. The method according to any one of claims 1 to 3, wherein the second access stratum data set further comprises all or a part of data in a fifth access stratum data set, and the fifth access stratum data set is access stratum data requested by the event consumer application function network element from the data collection application function network element.

5. A data collection verification method, comprising:
receiving, by a data collection application function network element, first indication information from a network device, wherein the first indication information indicates that access stratum data in a first access stratum data set of a terminal device can be provided to another network element only after the access stratum data is authorized;
receiving, by the data collection application function network element, second request information from an event consumer application function network element, wherein the second request information is used to request a third access stratum data set of the terminal device, the third access stratum data set comprises all or a part of the data in the first access stratum data set, the second request information comprises first information, the first information indicates a first key, and the first key is used for authorization of the third access stratum data set;
sending, by the data collection application function network element, the first information to the network device; and
receiving, by the data collection application function network element, second information from the network device, wherein the second information indicates a verification result of the first key.

6. The method according to claim 5, wherein the method further comprises:
receiving, by the data collection application function network element, third request information from the event consumer application function network element, wherein the third request information is used to request a fifth access stratum data set of the terminal device, and the fifth access stratum data set comprises all or a part of the data in the first access stratum data set; and
sending, by the data collection application function network element, third information to the event consumer application function network element, wherein the third information indicates that the second access stratum data set needs to be authorized by the network device, the second access stratum data set comprises all or a part of the data in the fifth access stratum data set, the third information comprises first identifier information, and the first identifier information comprises an identifier of the network device.

7. The method according to claim 6, wherein the method further comprises:
sending, by the data collection application function network element, first acknowledgment information to the event consumer application function network element, wherein the first acknowledgment information indicates a request result of the third request information.

8. A data collection verification method, comprising:
sending, by an event consumer application function network element, first request information to a network device, wherein the first request information is used to request authorization of a second access stratum data set of a terminal device;
receiving, by the event consumer application function network element, first information from the network device, wherein the first information indicates a first key, the first key is used for authorization of a third access stratum data set, and the third access stratum data set comprises all or a part of data in the second access stratum data set; and
sending, by the event consumer application function network element, second request information to a data collection application function network element, wherein the second request information is used to request the third access stratum data set, and the second request information comprises the first information.

9. The method according to claim 8, wherein the method further comprises:
sending, by the event consumer application function network element, third request information to the data collection application function network element, wherein the third request information is used to request a fifth access stratum data set of the terminal device; and
receiving, by the event consumer application function network element, third information from the data collection application function network element, wherein the third information indicates that the second access stratum data set needs to be authorized by the network device, the second access stratum data set comprises all or a part of data in the fifth access stratum data set, the third information comprises first identifier information, and the first identifier information comprises an identifier of the network device.

10. The method according to claim 8 or 9, wherein the method further comprises:
receiving, by the event consumer application function network element, first acknowledgment information from the data collection application function network element, wherein the first acknowledgment information indicates a request result of the third request information.

11. A data collection verification method, comprising:
receiving, by a non-access stratum of a terminal device, first request information from a data collection application function network element, wherein the first request information is used to request authorization of a second access stratum data set of the terminal device;
sending, by the non-access stratum of the terminal device, the first request information to a network device;
receiving, by the non-access stratum of the terminal device, first information from the network device, wherein the first information comprises a first key, the first key is used for authorization of a third access stratum data set, and the third access stratum data set comprises all or a part of data in the second access stratum data set;
sending, by the non-access stratum of the terminal device, the first information to an access stratum of the terminal device;
sending, by the access stratum of the terminal device, the first information to the network device; and
receiving, by the access stratum of the terminal device, second information from the network device, wherein the second information indicates a verification result of the first key.

12. The method according to claim 11, wherein the method further comprises:
sending, by the non-access stratum of the terminal device, authorization result information to the data collection application function network element, wherein the authorization result information indicates data that is authorized and data that is not authorized in the second access stratum data set.

13. A data collection verification method, comprising:
sending, by an event consumer application function network element, third request information to a data collection application function network element, wherein the third request information is used to request a fifth access stratum data set of a terminal device;
receiving, by the event consumer application function network element, fourth information from the data collection application function network element, wherein the fourth information indicates that the second access stratum data set needs to be authorized by a non-access stratum of the terminal device, and the second access stratum data set comprises all or a part of data in the fifth access stratum data set; and
sending, by the event consumer application function network element, first request information to the data collection application function network element, wherein the first request information is used to request authorization of the second access stratum data set, and the first request information comprises identifier information of the ECAF.

14. The method according to claim 13, wherein the method further comprises:
receiving, by the event consumer application function network element, first acknowledgment information from the data collection application function network element, wherein the first acknowledgment information indicates a request result of the third request information.

15. A data collection verification method, comprising:
receiving, by a data collection application function network element, third request information from an event consumer application function network element, wherein the third request information is used to request a fifth access stratum data set of a terminal device;
sending, by the data collection application function network element, fourth information to the event consumer application function network element, wherein the fourth information indicates that the second access stratum data set needs to be authorized by a non-access stratum of the terminal device, and the second access stratum data set comprises all or a part of data in the fifth access stratum data set;
receiving, by the data collection application function network element, first request information from the event consumer application function network element, wherein the first request information is used to request authorization of the second access stratum data set, and the first request information comprises identifier information of the ECAF; and
sending, by the data collection application function network element, the first request information to the non-access stratum of the terminal device.

16. The method according to claim 15, wherein the method further comprises:
sending, by the data collection application function network element, first acknowledgment information to the event consumer application function network element, wherein the first acknowledgment information indicates a request result of the third request information.

17. A communication apparatus, comprising:
a unit configured to implement the method according to any one of claims 1 to 4, or a unit configured to implement the method according to any one of claims 5 to 7, or a unit configured to implement the method according to any one of claims 8 to 10, or a unit configured to implement the method according to claim 11 or 12, or a unit configured to implement the method according to claim 13 or 14, or a unit configured to implement the method according to claim 15 or 16.

18. A computer program product, wherein the computer program product comprises computer program code, and when the computer program code is run, an apparatus is caused to perform
the method according to any one of claims 1 to 4, or
the method according to any one of claims 5 to 7, or
the method according to any one of claims 8 to 10, or
the method according to claim 11 or 12, or
the method according to claim 13 or 14, or
the method according to claim 15 or 16.

19. A computer-readable storage medium, wherein the computer-readable storage medium stores a computer program, and when the computer program is run,
an apparatus is caused to perform the method according to any one of claims 1 to 4; or
an apparatus is caused to perform the method according to any one of claims 5 to 7; or
an apparatus is caused to perform the method according to any one of claims 8 to 10; or
an apparatus is caused to perform the method according to claim 11 or 12; or
an apparatus is caused to perform the method according to claim 13 or 14; or
an apparatus is caused to perform the method according to claim 15 or 16.

20. A chip system, comprising a processor, configured to invoke a computer program from a memory and run the computer program,
to cause a communication apparatus on which the chip system is installed to perform the method according to any one of claims 1 to 4; or
to cause a communication apparatus on which the chip system is installed to perform the method according to any one of claims 5 to 7; or
to cause a communication apparatus on which the chip system is installed to perform the method according to any one of claims 8 to 10; or
to cause a communication apparatus on which the chip system is installed to perform the method according to claim 11 or 12; or
to cause a communication apparatus on which the chip system is installed to perform the method according to claim 13 or 14; or
to cause a communication apparatus on which the chip system is installed to perform the method according to claim 15 or 16.

21. A communication system, comprising a terminal device, a network device, a data collection application function network element, and an event consumer application function network element, wherein the terminal device is configured to perform the method according to claim 11 or 12, the network device is configured to perform the method according to any one of claims 1 to 4, the data collection application function network element is configured to perform the method according to any one of claims 5 to 7, or is configured to perform the method according to claim 15 or 16, and the event consumer application function network element is configured to perform the method according to any one of claims 8 to 10, or is configured to perform the method according to claim 13 or 14.
